# EUROPEAN PATENT SPECIFICATION

(11) **EP 4 098 158 B1**
(45) Date of publication and mention of the grant of the patent: **11.09.2024**
(21) Application number: 22169321.1
(22) Date of filing: 21.04.2022
(51) Int. Cl.: A47J 37/06, A47J 37/12

(54) **MULTIFORM BASKET FOR AIR FRYER AND AIR FRYER HAVING MULTIPLE USE FORMS**
MULTIFORMKORB FÜR EINE LUFTFRITTEUSE UND LUFTFRITTEUSE MIT MEHRFACHEN VERWENDUNGSFORMEN
PANIER MULTIFORME POUR FRITEUSE À AIR ET FRITEUSE À AIR DOTÉE DE FORMES À USAGES MULTIPLES

(30) Priority: 03.06.2021 CN 202121233400 U; 03.06.2021 CN 202121235134 U; 03.06.2021 CN 202121233377 U
(43) Date of publication of application: 07.12.2022
(73) Proprietor: Ningbo Careline Electric Appliance Co., Ltd., Ningbo, Zhejiang 315000 (CN)
(72) Inventor: ZHANG, Yichi, ZHEJIANG, 315000 (CN)
(74) Representative: Locas, Davide

(56) References cited:
- CN-A- 110 664 270
- US-A1- 2018 255 971
- ANONYMOUS: "Balter Heißluftfritteuse HL-1200, Friteuse, 12 Liter, Mini Backofen, Dörrautomat Funktion, LCD Display, 10 Programme, inkl. Rezeptheft und Zubehör : Amazon.de: Home & Kitchen", 9 October 2020 (2020-10-09), pages 1 - 8, XP055962757, Retrieved from the Internet <URL:https://www.amazon.de/dp/B08QDMYCRN/ref=sspa_dk_detail_6?psc=1&pd_rd_i=B08QDMYCRN&pd_rd_w=wRyRh&content-id=amzn1.sym.5c744288-1df2-4442-912d-0f13c27cd7e0&pf_rd_p=5c744288-1df2-4442-912d-0f13c27cd7e0&pf_rd_r=GBEDDF5W3ETY9RBV9ADN&pd_rd_wg=tj3Hl&pd_rd_r=bb56476d-0af1-4dde-80dd-12e4ca614f38&s=kitchen&sp> [retrieved on 20220920]

## Description

### Technical Field

The present disclosure relates to the technical field of air fryers, and in particular, to a multiform basket for an air fryer and an air fryer having multiple use forms.

### Background Art

Air fryers are cooking appliances that are now well-liked. For existing air fryers, two forms, i.e., the form of a drawer-type basket and the form of a eversible door panel, are mainly available. However, existing products often can have only one form, and single use scenarios. In addition, for the form of a drawer-type basket, only one cooking cavity is generally formed inside an existing air fryer, and one basket is provided in the cooking cavity; and a heating pipe and a heat circulation fan are provided above the basket, and heated air flows continuously into the basket for heating food in the interior thereof, so as to realize air fried cooking of food. However, since only one basket for placing food is provided in the interior, such an air fryer requires cooking for multiple times, if different spice flavors are required during the cooking of a certain food material, for example, during air frying of potato chips, and it is impossible to fry different flavors at the same time, which indicates poor practicability.

For example, US2018255971A1 discloses an air fryer system which comprises a base having a heating source and an air source located therein, both sources being supplied power for operation by an AC power cord; CN110664270A describes an air fryer comprising a machine body internally provided with a cooking cavity, pot bodies which can enter and exit from the cooking cavity and an electric heating device which is arranged in the machine body and located above the cooking cavity.

### Summary

An embodiment of the present disclosure provides a multiform basket for an air fryer, wherein the basket is formed by splicing a left pot and a right pot together side by side, and at least one removable baffle is provided at the joint between the left pot and the right pot, such that a single placement cavity or two placement cavities are formed inside the basket.

In one or more embodiments, the left pot and the right pot are respectively provided with a left baffle holder and a right baffle holder at the joint, the left baffle holder and the right baffle holder are each provided with a guide structure, and the at least one baffle is vertically inserted into the left baffle holder and the right baffle holder along the corresponding guide structure.

In one or more embodiments, position-limiting bumps are respectively arranged at upper portions of both ends of the left baffle holder and the right baffle holder side by side, wherein a guide rail is formed between the position-limiting bumps arranged side by side and serves as the guide structure, and a side edge of the at least one baffle is configured to be able to be embedded into the guide rail.

In one or more embodiments, a position-limiting protrusion is provided at a position on the side edge of the at least one baffle corresponding to the corresponding position-limiting bump, and the position-limiting protrusion is configured to be located at the underside of the corresponding position-limiting bump when the lower end of the at least one baffle is inserted into the left baffle holder or the right baffle holder to reach the bottom thereof.

In one or more embodiments, one of the left baffle holder and the right baffle holder is provided with an insertion bone structure, while the other one is provided with an insertion slot structure matching the insertion bone structure.

In one or more embodiments, the basket further comprises a fixing bolt sleeve, which is configured to be arranged at the joint between the left pot and the right pot for connecting the left pot and the right pot, in a situation where the at least one baffle is removed such that the single placement cavity is formed inside the basket.

In one or more embodiments, the basket further comprises a fixing bolt sleeve, which is configured to be sleeved over the left baffle holder and the right baffle holder at the joint between the left pot and the right pot in a situation where the at least one baffle is removed such that the single placement cavity is formed inside the basket, wherein two ends of the fixing bolt sleeve are each provided with an elastic buckle plate at a position corresponding to the corresponding position-limiting bump, and the elastic buckle plate is configured to be interlocked with the corresponding position-limiting bump.

In one or more embodiments, the left pot and the right pot are each provided therein with a removable food tray.

In one or more embodiments, the basket is formed by splicing a left pot and a right pot together side by side, and one of the left pot and the right pot is provided with a positioning post, while the other one is provided with a positioning hole matching the positioning post and is further provided with a receiving slot corresponding to the positioning post, wherein the positioning post is configured to move when the left pot and the right pot are not spliced together so as to be accommodated in the receiving slot.

In one or more embodiments, the positioning post is configured to be rotatably arranged at an end of the receiving slot and be able to be accommodated in the receiving slot when being rotated to a vertically oriented state.

In one or more embodiments, side walls of the left pot and the right pot are each provided at the joint with a position-limiting block, each position-limiting block is vertically provided with a guide slot, and the at least one baffle is configured to be embedded into and slide in the corresponding guide slot.

In one or more embodiments, the basket further comprises a fixing bolt sleeve, which is configured to be connected in an insertion way to the side wall at the joint between the left pot and the right pot when the basket is in a state of a single placement cavity, wherein the fixing bolt sleeve includes a bolt sleeve backboard and position-limiting folded edges arranged on edges of the bolt sleeve backboard, an elastic buckle portion is further provided on the bolt sleeve backboard, and two sides of the position-limiting block are each provided with a position-limiting extension insertion board, wherein the position-limiting extension insertion boards are configured to be able to cooperate with and be connected in an insertion way to the position-limiting folded edges, while the elastic buckle portion and the position-limiting block are interlocked with each other.

In one or more embodiments, the basket further comprises a locking device, which is configured to be mounted on the bottom at the joint between the left pot and the right pot when the basket is in the state of a single placement cavity, so as to connect and fix the left pot and the right pot.

In one or more embodiments, a plurality of locking bones are provided at intervals on the bottom of the left pot and the right pot at the joint, the locking device includes a planar plate and side plates arranged on two sides of the planar plate, a plurality of protrusions are arranged at intervals on the inner sides of the side plates, each adjacent protrusions is provided therebetween with a notch matching the locking bone, the locking device covers the locking bones, and the locking bones enter the spaces between the protrusions and the planar plate through the corresponding notches.

In one or more embodiments, the positioning post is in a conical structure, and the positioning hole is a conical insertion hole.

An embodiment of the present disclosure further provides an air fryer having multiple use forms, comprising a body, wherein a cooking cavity is formed in the body, and one side of the body is provided with an opening to form a door frame communicating with the cooking cavity, wherein a removable door panel assembly configured to be capable of completely closing the door frame or a multiform basket for an air fryer as described above is arranged at the door frame.

In one or more embodiments, the removable door panel assembly includes a door panel main body and a mounting foot arranged on the lower side of the door panel main body, a mounting hole is provided at the bottom of the door frame, and the mounting foot is configured to be able to be inserted into the mounting hole for enabling the removable door panel assembly to rotate about the mounting hole to be opened.

In one or more embodiments, a position-limiting step is provided between the mounting hole and the housing of the body, and a position-limiting barrier edge extending in a direction towards the cooking cavity is provided in the mounting hole, wherein the position-limiting barrier edge and the position-limiting step are configured to abut against the mounting foot when the removable door panel assembly is in an opened state, such that the removable door panel assembly remains opened.

In one or more embodiments, the mounting foot is stepped, and a position-limiting groove is formed on the side of the mounting foot facing outwards, wherein when the removable door panel assembly is in an opened state, the position-limiting step is embedded into the position-limiting groove, while the free end of the mounting foot abuts against the position-limiting barrier edge.

In one or more embodiments, the mounting foot is configured to be able to be inserted into the mounting hole or be pulled out of the mounting hole, when the removable door panel assembly is rotated to be in an inclined state.

In one or more embodiments, the removable door panel assembly is provided with a visible window, so as to enable observation from outside on the internal of the cooking cavity.

In one or more embodiments, the basket is a drawer-type basket, the outsides of the left pot and the right pot are each provided with a door panel, a handle is mounted on the door panel, and the external surfaces of the two door panels are aligned with each other and with the housing surface of the body.

### Brief Description of Drawings

In order to more clearly illustrate technical solutions of embodiments of the present disclosure, accompanying drawings required to be used in the embodiments will be briefly presented below. It should be understood that the accompanying drawings below merely show some embodiments of the present disclosure, rather than all embodiments thereof, and therefore should not be considered as limitation to the scope of protection which is defined by the appended claims. For a person ordinarily skilled in the art, further relevant drawings could be obtained according to these accompanying drawings without using creative efforts.
Fig. 1 is a perspective structural diagram of a multiform basket for an air fryer according to the present disclosure in an exploded state;
Fig. 2 is an assembled perspective structural diagram of the multiform basket for an air fryer according to the present disclosure in a state of two placement cavities;
Fig. 3 is an assembled perspective structural diagram of the multiform basket for an air fryer according to the present disclosure in a state of a single placement cavity;
Fig. 4 is a perspective structural diagram of a left pot of the multiform basket for an air fryer according to the present disclosure in an exploded state;
Fig. 5 is a structural diagram of a left baffle holder and a right baffle holder of the multiform basket for an air fryer according to the present disclosure;
Fig. 6 is a structural diagram of a fixing bolt sleeve of the multiform basket for an air fryer according to the present disclosure in a mounted state;
Fig. 7 is a perspective structural diagram of the fixing bolt sleeve of the multiform basket for an air fryer according to the present disclosure;
Fig. 8 is a schematic diagram showing the insertion process of a baffle of the multiform basket for an air fryer according to the present disclosure;
Fig. 9 is a schematic diagram showing the splicing process of the left pot and the right pot of the multiform basket for an air fryer according to the present disclosure;
Fig. 10 is a schematic diagram showing the splicing process of the fixing bolt sleeve of the multiform basket for an air fryer according to the present disclosure;
Fig. 11 is a perspective structural diagram of another multiform basket for an air fryer according to the present disclosure;
Fig. 12 is a sectional structural diagram of the another multiform basket for an air fryer according to the present disclosure;
Fig. 13 is a structural diagram of a left pot and a right pot of the another multiform basket for an air fryer according to the present disclosure in an exploded state;
Fig. 14 is a structural schematic diagram of the another multiform basket for an air fryer according to the present disclosure in a state of a single placement cavity without a locking device mounted therein;
Fig. 15 is a structural schematic diagram of the another multiform basket for an air fryer according to the present disclosure in a state of a single placement cavity with a locking device mounted therein;
Fig. 16 is a schematic diagram showing the mounting of a fixing bolt sleeve of the another multiform basket for an air fryer according to the present disclosure in a state of a single placement cavity;
Fig. 17 is a perspective structural diagram of a locking device of the another multiform basket for an air fryer according to the present disclosure;
Fig. 18 is a perspective structural diagram of the fixing bolt sleeve of the another multiform basket for an air fryer according to the present disclosure;
Fig. 19 is a structural schematic diagram of position-limiting blocks of the another multiform basket for an air fryer according to the present disclosure;
Fig. 20 is a schematic diagram showing the combination process of the left pot and the right pot of the another multiform basket for an air fryer according to the present disclosure;
Fig. 21 is a perspective structural diagram of an air fryer having multiple use forms according to the present disclosure;
Fig. 22 is a structural diagram of the air fryer having multiple use forms according to the present disclosure in an opened state;
Fig. 23 is a half-sectional structural diagram showing the removal process of the air fryer having multiple use forms according to the present disclosure;
Fig. 24 is a half-sectional structural diagram showing an opened and position-limiting state of the air fryer having multiple use forms according to the present disclosure;
Fig. 25 is a half-sectional structural diagram showing a closed state of the air fryer having multiple use forms according to the present disclosure;
Fig. 26 is an enlarged structural diagram for part A of the air fryer having multiple use forms according to Fig. 23;
Fig. 27 is an enlarged structural diagram for part B of the air fryer having multiple use forms according to Fig. 24;
Fig. 28 is a perspective structural diagram of another air fryer having multiple use forms according to the present disclosure;
Fig. 29 is a half-sectional structural diagram showing a disassembled state of the another air fryer having multiple use forms according to the present disclosure;
Fig. 30 is a structural schematic diagram showing a state of a drawer-type pot assembly of the another air fryer having multiple use forms according to the present disclosure; and
Fig. 31 is a structural schematic diagram showing another state of the drawer-type pot assembly of the another air fryer having multiple use forms according to the present disclosure.

Reference signs:
1-body; 2-removable door panel assembly; 3-cooking cavity; 4-door frame; 5-drawer-type pot assembly; 021-mounting foot; 022-door panel main body; 023-position-limiting step; 024-mounting hole; 025-position-limiting barrier edge; 026-position-limiting groove; 027-visible window; 51-left pot; 52-right pot; 40-baffle; 54-handle; 55-door panel; 523-right baffle holder; 515-left baffle holder; 60-fixing bolt sleeve; 110-food tray; 131-insertion bone structure; 402-position-limiting protrusion; 151-guide rail; 152-insertion slot structure; 153-position-limiting bump; 601-elastic buckle plate; 25-receiving slot; 26-positioning post; 27-positioning hole; 211-locking bone; 212-position-limiting block; 213-guide slot; 214-position-limiting extension insertion board; 115-locking device; 91-bolt sleeve backboard; 92-position-limiting folded edge; 93-elastic buckle portion; 1151-protrusion; 1152-side plate; 1153-planar plate; 1154-hollowed-out slot; and 1155-notch.

### Detailed Description of Embodiments

The technical solutions in the embodiments of the present disclosure will be described clearly and completely below in conjunction with the accompanying drawings in the embodiments of the present disclosure, and apparently, some but not all embodiments of the present disclosure are described. Any other embodiments, obtained by a person ordinarily skilled in the art without using creative efforts based on the embodiments in the present disclosure, shall fall within the scope of protection of the present invention as long as they fall within the scope as defined by the appended claims.

It should be noted that similar reference signs and letters represent similar items in the following accompanying drawings, thus, once a certain item is defined in one accompanying drawing, no further definition and explanation of this item is necessary in subsequent accompanying drawings.

In the description of the present disclosure, it shall be clarified that orientation or positional relationships indicated by terms such as "central", "upper", "lower", "left", "right", "vertical", "horizontal", "inner", and "outer", if appear, are orientation or positional relationships shown based on the accompanying drawings, or orientation or positional relationships of a product of the present disclosure when being conventionally placed in use, merely for facilitating the description of the present disclosure and for simplifying the description, rather than indicating or implying that a specified device or element must have a specific orientation, and be constructed and operated in a certain orientation, and therefore should not be construed as limitation to the present disclosure.

In addition, terms such as "first", "second", and "third", if appear, are used merely for distinctive description, and should not be construed as indicating or implying to have importance in relativity.

In addition, terms such as "horizontal", "vertical", and "overhanging", if appear, do not mean that a component is required to be absolutely horizontal or overhanging, on the contrary, the component may be slightly inclined. For example, by "horizontal", it merely means that a structure is more horizontal in comparison with "vertical", rather than indicating that this structure must be completely horizontal, on the contrary, this structure may be slightly inclined.

In the description of the present disclosure, it should be further clarified that, unless otherwise expressly specified and defined, terms such as "provide", "mount", "join", and "connect", if appear, should be construed in a broad sense. For example, it may be fixed connection, or detachable connection, or integrated connection; it may be mechanical connection or electrical connection; or it may be direct connection, or indirect connection via an intermediate, or inner communication between two elements. For a person ordinarily skilled in the art, specific meanings of the above-mentioned terms in the present disclosure could be construed in accordance with specific circumstances.

The multiform basket for an air fryer provided in an embodiment of the present disclosure can be switched between two forms, i.e. the form of a single placement cavity and the form of two placement cavities, as required, which facilitates food cooking, and the basket has reliable splicing, cooperating and positioning, which indicates strong practicability.

The air fryer having multiple use forms provided in an embodiment of the present disclosure has two forms, i.e. a removable turnover door panel and the multiform basket for an air fryer as described above, and a corresponding product form can be flexibly selected according to the characteristics of the food to be cooked or the characteristics of the food container.

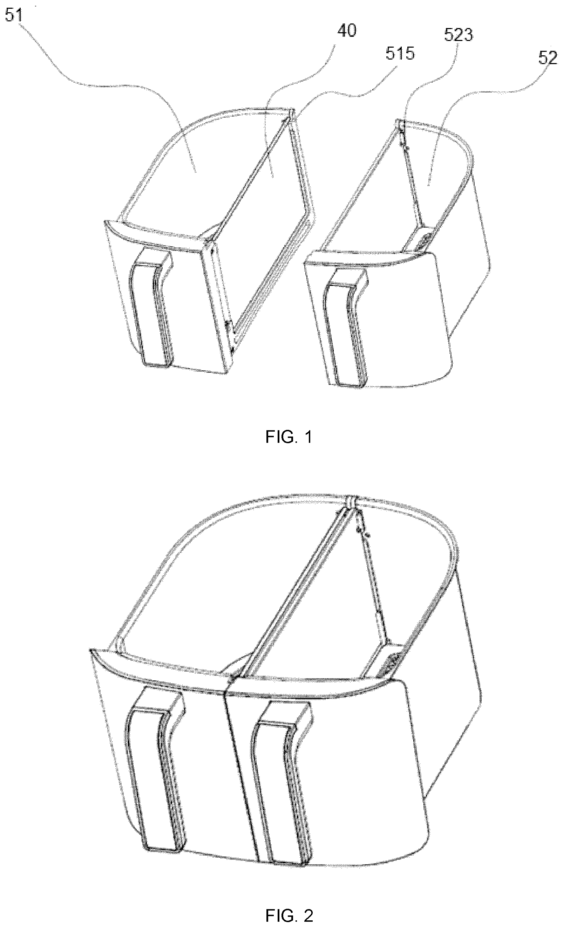

As shown in Figs. 1-10, an embodiment of the present disclosure provides a multiform basket for an air fryer according to an embodiment. As shown in Figs. 1-3, the basket is formed by splicing a left pot 51 and a right pot 52 together side by side, and removable baffle(s) 40 is provided at the joint between the left pot 51 and the right pot 52, which enables a single placement cavity or two placement cavities to be formed inside the basket. In the present embodiment, the left pot 51 and the right pot 52 are combined and spliced with each other, hereby forming a complete basket, wherein the size of the complete basket is similar to that of an existing integrated basket, and the baffle 40 is removable and can be removed and mounted in various ways, for example, by way of inserting and fixing, or by way of snap-fitting, wherein in a case of using the way of inserting, the inserting direction can be set to be from up to down, or be set to be realized by inserting from a side; the number of the baffles 40 may be preferably two, and the two baffles 40 are respectively mounted on the left pot 51 and the right pot 52, in this way, the integrity of the placement cavity in the inside can also be ensured, even when the left pot 51 and the right pot 52 are separated from each other.

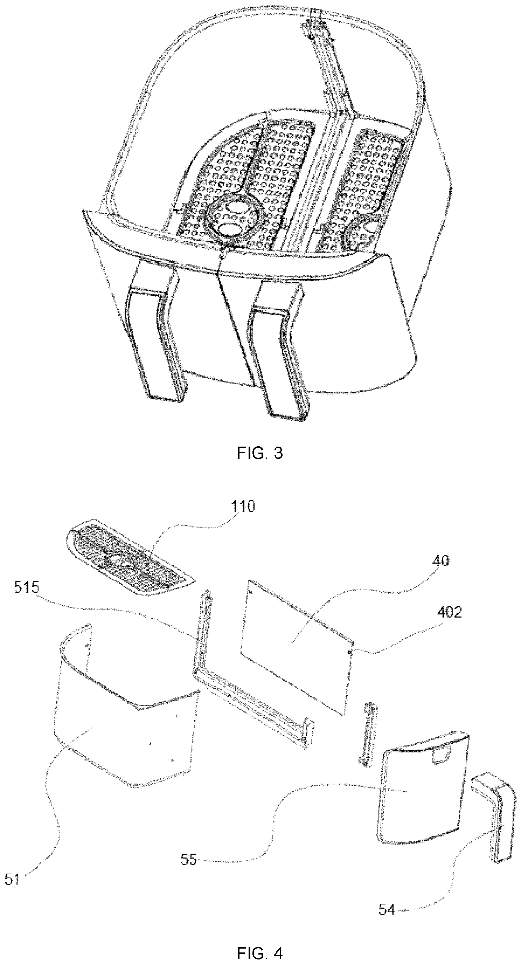

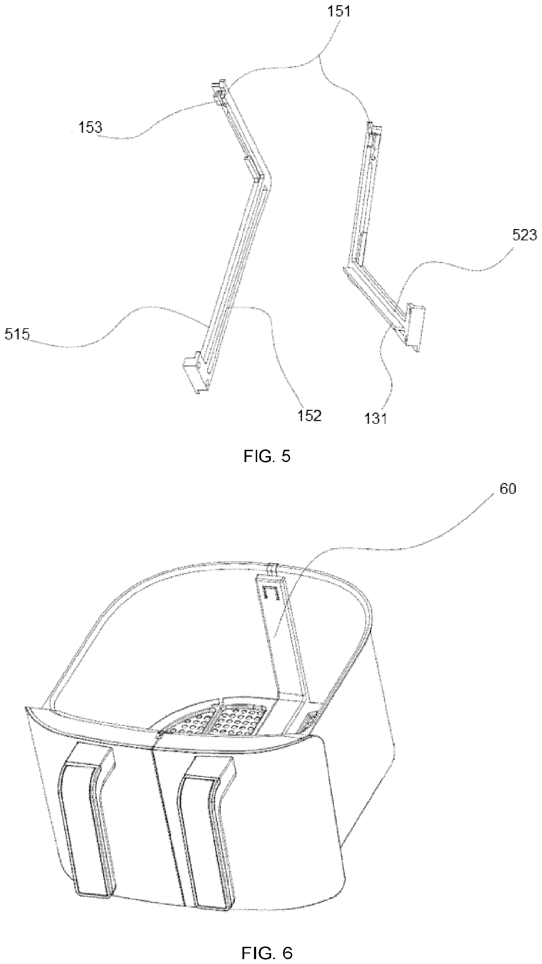

In the present embodiment, as shown in Figs. 4 and 5, in order to facilitate the mounting and the removal of the baffle 40, the left pot 51 and the right pot 52 are respectively provided with a left baffle holder 515 and a right baffle holder 523 at the joint, the left baffle holder 515 and the right baffle holder 523 are each provided with a guide structure, and the baffle 40 is vertically inserted into the left baffle holder 515 and the right baffle holder 523 along the corresponding guide structure. The guide structure can guide the vertical insertion of the baffle 40, and the guide structure may be a guide slot, or may be a guide rod or a guide plate, as long as it can guide the baffle 40. Moreover, the guide structure does not affect the upward pulling-out and the removal of the baffle 40, and the baffle 40 would not waggle/shake after being in contact with the guide structure, hereby enabling relatively smooth whole inserting and pulling processes of the baffle 40.

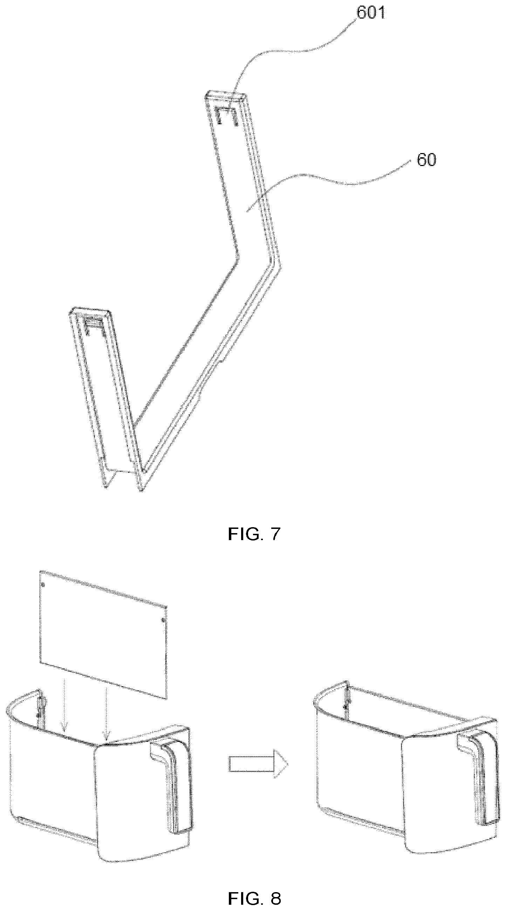

In the present embodiment, as shown in Fig. 5, position-limiting bumps 153 are respectively arranged at upper portions of both ends of the left baffle holder 515 and the right baffle holder 523 side by side, and a guide rail 151 is formed between the side-by-side arranged position-limiting bumps 153 and serves as the guide structure. As shown in Fig. 8, when one baffle 40 is inserted into the left baffle holder 515 or the right baffle holder 523, a side edge of the baffle 40 is embedded into the guide rail 151. The position-limiting bumps 153 are respectively arranged on the side walls where both ends of the left baffle holder 515 and the right baffle holder 523 face the inner side, and preferably respectively arranged on upper portions of the left baffle holder 515 and the right baffle holder 523. In this way, the baffle 40 can be inserted into the guide rail 151 a step ahead, hereby functioning for guiding, wherein the guide rail 151 does not need to have a long length, and a segment thereof is enough, wherein the frictional force can be reduced, hereby enabling smoother insertion of the baffle 40.

In the present embodiment, as a supplementary structure, as shown in Fig. 4, a position-limiting protrusion 402 is provided at a position on the side edge of the baffle 40 corresponding to the corresponding position-limiting bump 153, and the position-limiting protrusion 402 is located at the underside of the corresponding position-limiting bump 153 when the lower end of the baffle 40 is inserted into the left baffle holder 515 or the right baffle holder 523 to reach the bottom thereof. In this way, the position-limiting protrusion 402 can be enabled to function for position limiting, when the baffle 40 is inserted downwards in place. In other words, when the baffle 40 is moved upwards, the position-limiting protrusion 402 will abut against the position-limiting bump 153, which means that it cannot be pulled out without exerting a great force. Therefore, the baffle 40 would not fall out, even if the basket is dried upside-down after being washed and cleaned. Of course, during use, the position-limiting protrusion 402 may also be arranged at a height corresponding to the guide rail 151, and the position-limiting protrusion 402 is always engaged with the corresponding guide rail 151 and here functions also for position limiting.

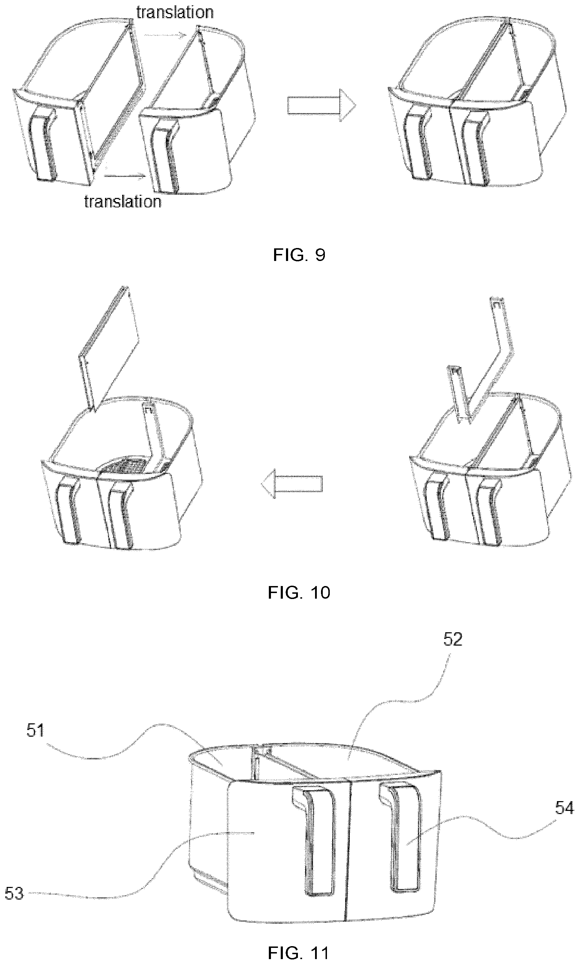

In the present embodiment, as shown in Figs. 4 and 5, in order to improve the firmness of the splicing between the left pot 51 and the right pot 52, an insertion bone structure 131 and an insertion slot structure 152 matching each other are provided at the joint between the left pot 51 and the right pot 52. When the left pot 51 and the right pot 52 are spliced with each other, the insertion bone structure 131 can be inserted into the insertion slot structure 152, as shown in Fig. 9, and when being in the inserted state, the two are brought into tight contact, thus a relatively great frictional force can be produced, and no loosening would occur after the insertion, and certain position-limiting and guiding function can be achieved, hereby improving the reliability of the splicing.

On the basis of the above embodiment, the insertion bone structure 131 and the insertion slot structure 152 can be arranged respectively on the left baffle holder 515 and on the right baffle holder 523, wherein one of the left baffle holder 515 and the right baffle holder 523 is provided with the insertion bone structure, while the other one is provided with the insertion slot structure 152 matching the insertion bone structure 131.

In the present embodiment, as shown in Figs. 6 and 7, when the baffle 40 is removed such that a single placement cavity is formed inside the basket, a fixing bolt sleeve (i.e. latch structure/lock structure) 60 is provided at the joint between the left pot 51 and the right pot 52 so as to connect the left pot 51 and the right pot 52. The fixing bolt sleeve 60 includes two side plates and a bottom plate connecting the two side plates, which cover the joint between the left pot 51 and the right pot 52 and function as a connecting piece. In this way, the splicing between the left pot 51 and the right pot 52 is more reliable and practical.

As a preferable embodiment, as shown in Fig. 10, when the baffle 40 is removed such that a single placement cavity is formed inside the basket, a fixing bolt sleeve 60, which is sleeved over the left baffle holder 515 and the right baffle holder 523, is provided at the joint between the left pot 51 and the right pot 52. Two ends of the fixing bolt sleeve 60 are each provided with an elastic buckle plate 601 at a position corresponding to the corresponding position-limiting bump 153, and the elastic buckle plate 601 is interlocked with the corresponding position-limiting bump 153. Both sides of the fixing bolt sleeve 60 are respectively provided with a folded edge structure, which interlocks the left baffle holder 515 and the right baffle holder 523 with each other and functions for position limiting in a transverse direction, while the elastic buckle plate 601 can function for position limiting in a vertical direction. Thus, during use, it is only required to put the left baffle holder 515 and the right baffle holder 523 together, then insert the fixing bolt sleeve 60 from up to down, till the elastic buckle plate 601 is interlocked with the position-limiting bump 153, which operations are very convenient.

In an optional embodiment, the multiform basket is a drawer-type basket, the outsides of the left pot 51 and the right pot 52 are each provided with a door panel 55, the door panels 55 are each provided with a handle 54, and the external surfaces of the two door panels 55 are aligned with each other and with the housing surface of the air fryer. In this way, when the drawer-type basket is inserted into the cooking cavity of the air fryer, the exterior of the drawer-type basket is enabled to form an integrated body, with the housing surface of the air fryer, realizing a relatively aesthetic appearance.

As a further supplement, a removable food tray ((i.e., a board for placing food to be fried)) 110 is respectively provided in the left pot 51 and in the right pot 52. As shown in Fig. 4, the food trays 110 can be placed on steps formed on the inner side wall of the left pot 51 and the right pot 52, and can be used for placing food. A plurality of hollowed-out holes can be provided on the food tray 110 so as to facilitate the passage of heating air flow and the falling off and the collection of food grease. In order that the food tray 110 can be taken out quickly, a pair of grabbing holes for lifting the food tray 110 up can be provided in the middle of the food tray 110, which facilitates picking and placing as well as cleaning the food tray 110.

Compared with the prior art, the multiform basket for an air fryer according to the present disclosure can achieve beneficial technical effects, for example:
1. By using a structure of splicing a left pot and a right pot together and by providing removable baffle(s), the basket is enabled to be switched between two forms, i.e. the form of a single placement cavity and the form of teo placement cavities, as required, achieving strong practicability; and the baffle(s) is positionally limited and guided through the left baffle holder and the right baffle holder, and can be mounted or dissembled smoothly and reliably.
2. An insertion bone structure and an insertion slot structure matching each other are arranged at the joint between the left pot and the right pot, which ensures reliable cooperation between the left pot and the right pot.
3. When the form of a single placement cavity is required, the reliability and the practicability of the product in the form of a single placement cavity can be further achieved by additionally providing a fixing bolt sleeve for being sleeved over the left baffle holder and the right baffle holder and by positioning through a bolt-elastic buckle structure.

As shown in Figs. 11-20, an embodiment of the present disclosure provides another multiform basket for an air fryer according to the present disclosure. As shown in Figs. 11-13, the basket is formed by splicing a left pot 51 and a right pot 52 together side by side, and one of the left pot 51 and the right pot 52 is provided with a positioning post 26, while the other one is provided with a positioning hole 27 matching the positioning post 26 and is further provided with a receiving slot 25 corresponding to the positioning post 26, wherein the positioning post 26 is moved so as to be accommodated in the receiving slot 25, when the left pot 51 and the right pot 52 are not spliced together; and each of the left pot 51 and the right pot 52 occupies a half of the volume of the basket, and they form a complete basket after being spliced together. During splicing, in order that the left pot 51 and the right pot 52 can be docked and brought in place quickly, the positioning post 26 and the positioning hole 27 matching each other are provided between the two, and the left pot 51 and the right pot 52 can be accurately spliced together after that the positioning post 26 is inserted into the positioning hole 27 in place. On the contrary, when the left pot 51 and the right pot 52 are not spliced together, the positioning post 26 is accommodated in the receiving slot 25, so as to prevent the extended positioning post 26 from being damaged due to collision.

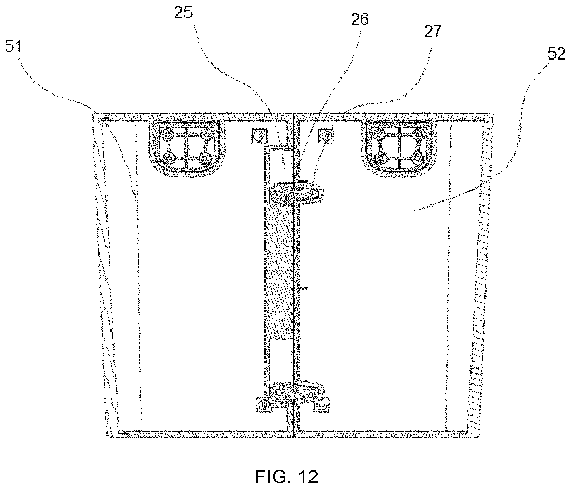

In the present embodiment, as shown in Fig. 12, the positioning post 26 is rotatably arranged at an end of the receiving slot 25, and the positioning post 26 can be accommodated in the receiving slot 25 when being rotated to a vertically oriented state. Such an arrangement enables a rotation angle of the positioning post 26 of only 90°, and when being rotated to a horizontal state, the positioning post 26 can be inserted into the positioning hole 27, achieving convenient operations.

In the present embodiment, as shown in Fig. 12, the positioning post 26 is of a conical structure, and the positioning hole 27 is a conical insertion hole, wherein the conical structure has a certain guiding effect, such that the insertion cooperation between the positioning post 26 and the positioning hole 27 is facilitated; moreover, the mutual extrusion of conical surfaces facilitates the increase of frictional force, hereby realizing firmer fixing of the left pot 51 and the right pot 52.

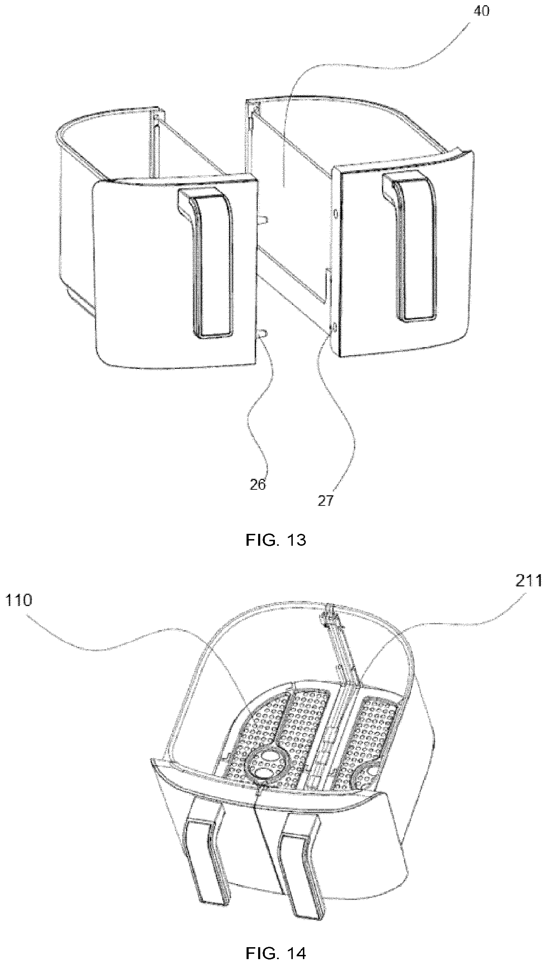

As another embodiment, as shown in Fig. 13, removable baffles 40 are provided at the joint between the left pot 51 and the right pot 52, which enables a single placement cavity or dual placement cavities to be formed inside the basket. After that the baffles 40 are removed, a sole placement cavity is formed inside the left pot 51 and the second pot 52, which allows placing relatively large food or more food. On the contrary, when the baffles 40 have been mounted, the interior chamber of the left pot 51 and the interior chamber of the right pot 52 are separated from each other, and food can be respectively placed separately, for example, different kinds of food can be placed, or same food can be placed to be cooked in different ways, which is very convenient.

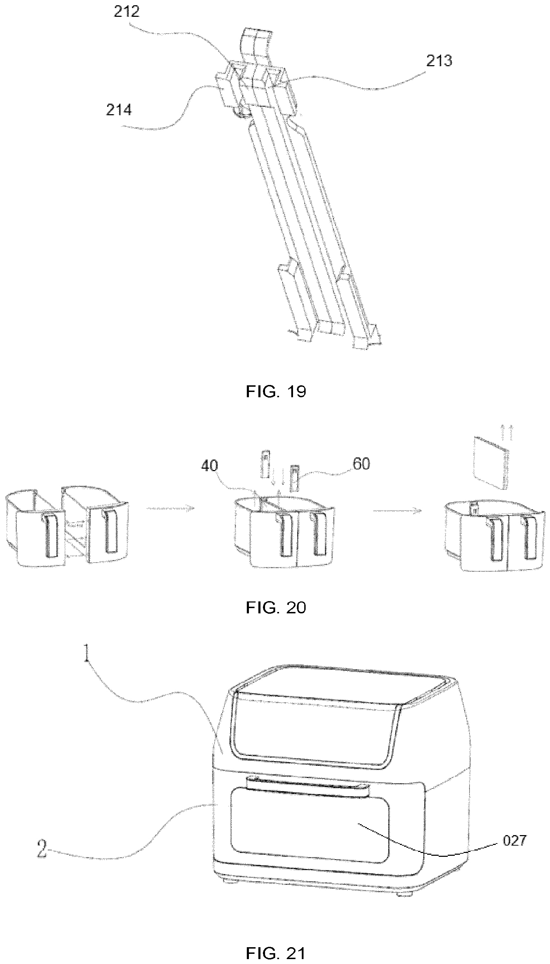

In the present embodiment, as shown in Fig. 19, position-limiting blocks 212 are respectively arranged on the side walls of the left pot 51 and the right pot 52 at the joint, each position-limiting block 212 is vertically provided with a guide slot 213, and the baffle 40 is embedded into and slide in the corresponding guide slot 213. The inserting and the pulling-out of the baffle 40 can be guided through the guide slot 213, such that the inserting of the baffle 40 is smoother. During actual implementation, two baffles 40 may be provided, wherein each of the left pot 51 and the right pot 52 has one baffle, and likewise, two position-limiting blocks 212 and two guide slots 213 may also be provided respectively.

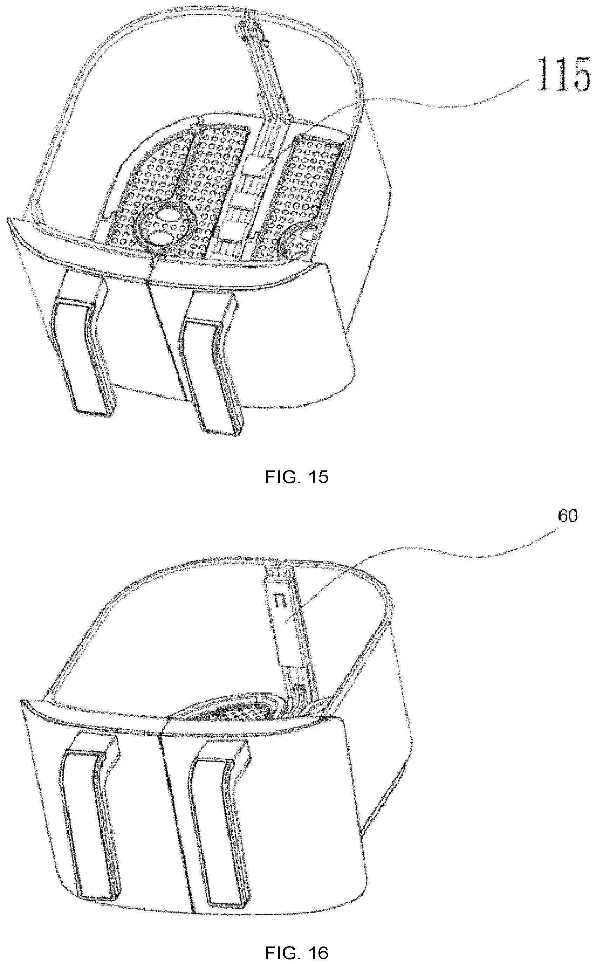

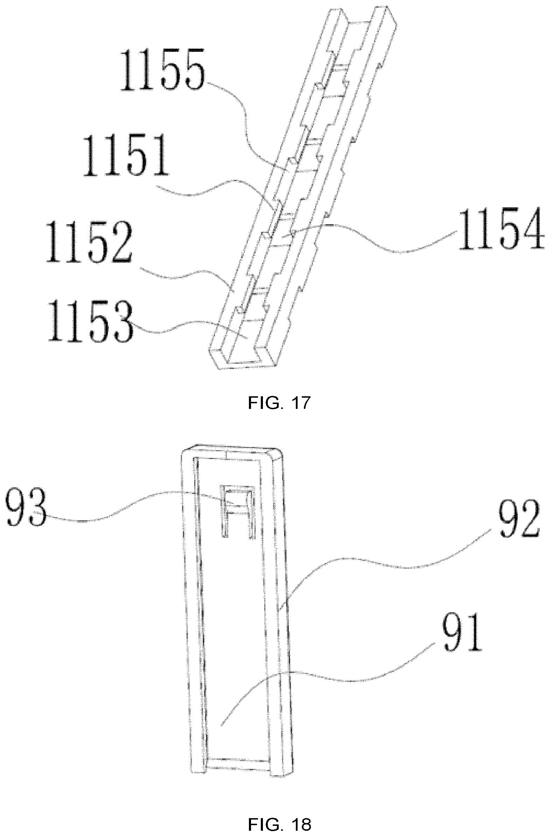

As another embodiment, when the basket is in the state of a single placement cavity, a fixing bolt sleeve 60 is connected in a inserting way to the side walls at the joint between the left pot 51 and the right pot 52, as show in Figs. 16 and 18, the fixing bolt sleeve 60 includes a bolt sleeve backboard 91 and position-limiting folded edges 92 arranged on edges of the bolt sleeve backboard 91, an elastic buckle portion 93 is further provided on the bolt sleeve backboard 91, and both sides of the position-limiting block 212 are each provided with a position-limiting extension insertion board 214, wherein the position-limiting extension insertion board 214 cooperates with the corresponding position-limiting folded edge 92, while the elastic buckle portion 93 and the position-limiting block 212 are interlocked with each other. The fixing bolt sleeve 60 can reinforce the joint between the left pot 51 and the right pot 52, wherein the lower end of the fixing bolt sleeve 60 is provided with an opening, while the other three edges each have a position-limiting folded edge 92, and when mounting the fixing bolt sleeve 60, as shown in Fig. 10, the fixing bolt sleeve 60 is sleeved over the position-limiting block 212 from up to down, and the position-limiting extension insertion board 214 is embedded into the position-limiting folded edge 92 for sliding, till the elastic buckle portion 93 and the position-limiting block 212 are interlocked with each other. In this way, the fixing bolt sleeve 60 cannot move, and firmly connects and fixes two position-limiting blocks 212.

As another embodiment, as shown in Figs. 14 and 15, when the basket is in the state of a single placement cavity, a locking device 115 is mounted on the bottom of the left pot 51 and the right pot 52 at the joint therebetween, so as to connect and fix the left pot 51 and the right pot 52. By providing the locking device 115, the splicing of the left pot 51 and the right pot 52 is enabled to be firmer. During use, it can be used in cooperation with the fixing bolt sleeve 60 in the above embodiment, but under certain circumstances, in a case of a locking device 115 is mounted, it is possible to not install a fixing bolt sleeve and directly insert a baffle 40, as long as the baffle 40 can be inserted downwards to abut against the locking device 115 is enough.

In the present embodiment, as shown in Figs. 14 and 17, a plurality of locking bones 211 are provided at intervals on the bottoms of the left pot 51 and the right pot 52 at the joint therebetween, the locking device 115 includes a planar plate 1153 and side plates 1152 arranged on two sides of the planar plate 1153, a plurality of protrusions 1151 are arranged at intervals on the inner sides of the side plates 1152, each two adjacent protrusions 1151 is provided therebetween a notch 1155 matching the locking bone 211, the locking device 115 covers the locking bones 211, and the locking bones 211 enter the space between the protrusions 1151 and the planar plate 1153 through the corresponding notches 1155. During use, the locking device 115 is covered on the locking bones 211, which are embedded into the corresponding notches 1155, the locking device 115 is then translationally slid, and accordingly, the locking bones 211 can be moved to the positions of the protrusions 1151, and the edge of each locking bone 211 and the corresponding protrusion 1151 are interlocked with each other. In this way, the locking bones 211 on the left pot 51 and the right pot 52 can be clamped and fixed.

In the present embodiment, the planar plate 1153 can be provided with a plurality of hollowed-out slots 1154. In this way, when mounting the locking device 115, it is allowed to observe the positions of the locking bones 211 through the hollowed-out slots 1154, which facilitates aligning the locking bones 211 with the corresponding notches 1155, hereby enabling more convenient operations.

As a supplementary embodiment, as shown in Fig. 11, the basket is a drawer-type basket, the outsides of the left pot 51 and the right pot 52 are each provided with a door panel 55, each door panel 55 is provided with a handle 54, and the external surfaces of the two door panels 55 are aligned with each other and with the housing surface of the air fryer. The left pot 51 and the right pot 52 are each provided therein with a removable food tray 110. As shown in Fig. 14, the food trays 110 can be erected on steps formed on the inner side walls of the left pot 51 and the right pot 52, and can be used for placing food. The food tray 110 is provided with a plurality of hollowed-out holes so as to facilitate the passage of heating air flow and the falling off and the collection of food grease. In order that the food tray 110 can be taken out quickly, a pair of grabbing holes for lifting the food tray 110 up can be provided in the middle of the food tray 110, which facilitates picking and placing as well as cleaning the food tray 110.

Compared with the prior art, the multiform basket for an air fryer according to the another embodiment of present disclosure can achieve beneficial technical effects, such as:
1. In order to splicing the left pot and the right pot together, the left pot and the right pot are respectively provided with a positioning post structure and a positioning hole structure corresponding to each other, hereby ensuring reliable positioning and cooperation. Meanwhile, the pot is provided with a receiving slot corresponding to the rotatable positioning post, wherein the rotatable positioning post can be hidden when pots are not spliced together, which enhances the practicability;
2. A removable baffle structure is provided at the joint between the left pot and the right pot, and the basket can be switched between two forms, i.e., the form of a single placement cavity and the form of two placement cavities, as required, enabling strong practicability;
3. When the form of a single placement cavity is required, a fixing bolt sleeve on the side wall at the joint between the left pot and the right pot is additionally provided and a bolt-elastic buckle structure is used for positioning, thus further achieving the reliability and the practicability of the product in the form of a single placement cavity ;
4. When the form of a single placement cavity is required, a locking device is provided on the bottom wall at the joint between the left pot and the right pot, and the locking device can lock the left pot and the right pot by sliding.

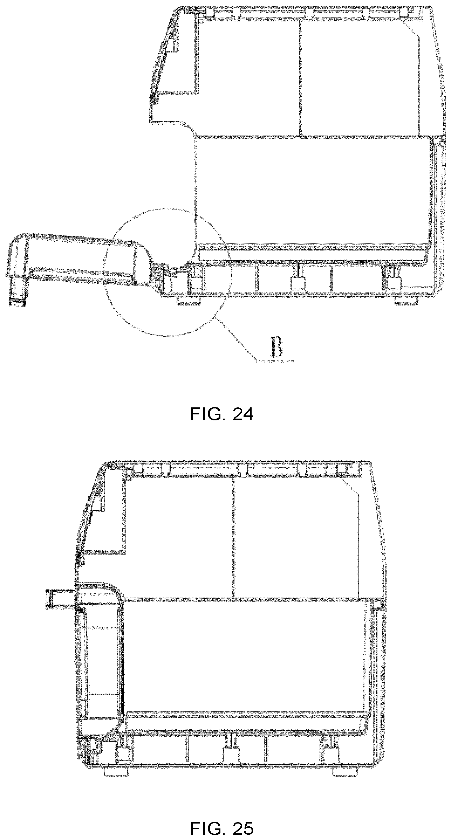

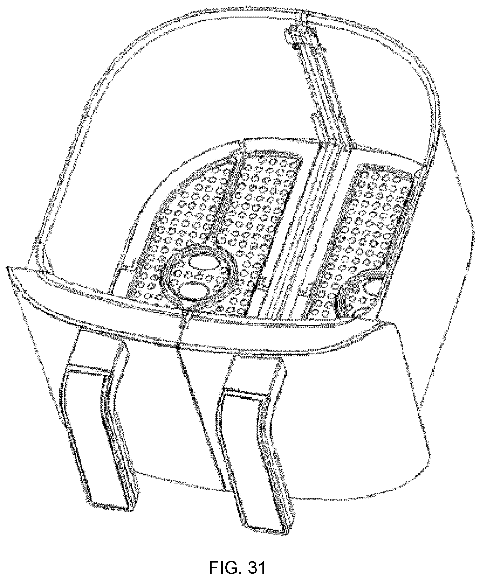

As shown in Figs. 21-31, embodiments of the present disclosure provide an air fryer having multiple use forms, comprising a body 1, wherein a cooking cavity 3 is formed in the body 1, and a door frame 4 communicating with the cooking cavity 3 is formed by an opening at one side of the body 1, wherein a removable door panel assembly 2 capable of completely closing the door frame 4 or a multiform basket (i.e., a drawer-type pot assembly 5) as aforementioned is arranged at the door frame 4, wherein the removable door panel assembly 2 and the drawer-type pot assembly 5 cannot be used simultaneously. The removable door panel assembly 2 can be arranged at the door frame 4, and the removable door panel assembly 2 can completely close the door frame, or can also be rotated to be opened so as to facilitate taking food out of the cooking cavity and/or placing food thereinto. When the removable door panel assembly 2 is removed, the drawer-type pot assembly 5 can be inserted through the door frame 4, and the drawer-type pot assembly 5 can also completely close the door frame. The use is relatively flexible, which enables the air fryer to have two use forms.

The air-fryer embodiment that comprises the removable door panel assembly configured to completely close the door frame is not according to the invention and is present for illustration purposes only.

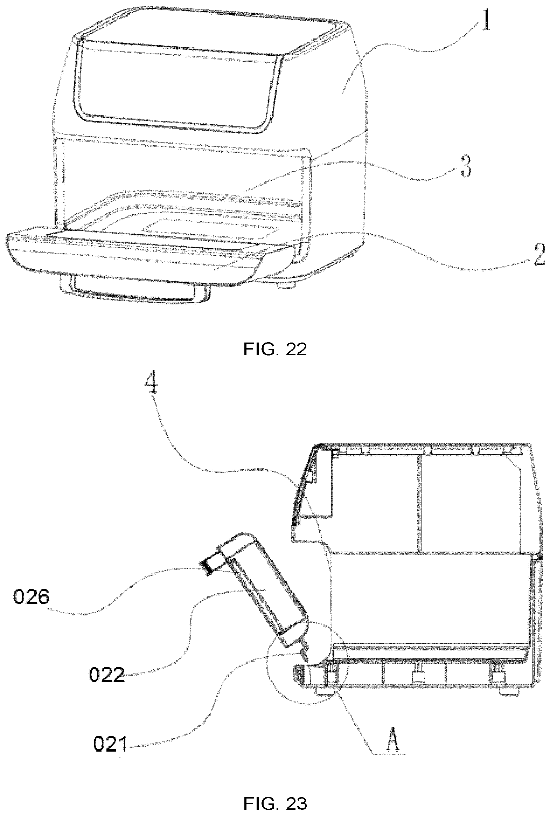

In the present embodiment, as shown in Figs. 23-25, the removable door panel assembly 2 includes a door panel main body 022 and a mounting foot 021 arranged on the lower side of the door panel main body 022, a mounting hole 024 is provided at the bottom of the door frame 4, and the mounting foot 021 is inserted into the mounting hole 024 for enabling the removable door panel assembly 2 to rotate about the mounting hole 24 to be opened. The mounting foot 021 functions here as a pivot point and facilitates the overall rotation of the removable door panel assembly 2.

In the present embodiment, the removable door panel assembly 2 is provided with a visible window 027, so as to enable observation from outside on the internal of the cooking cavity 3. Heat-protecting glass is preferably used for the visible window 027, so as to facilitate the observation from outside on the cooking process of food inside the cooking cavity.

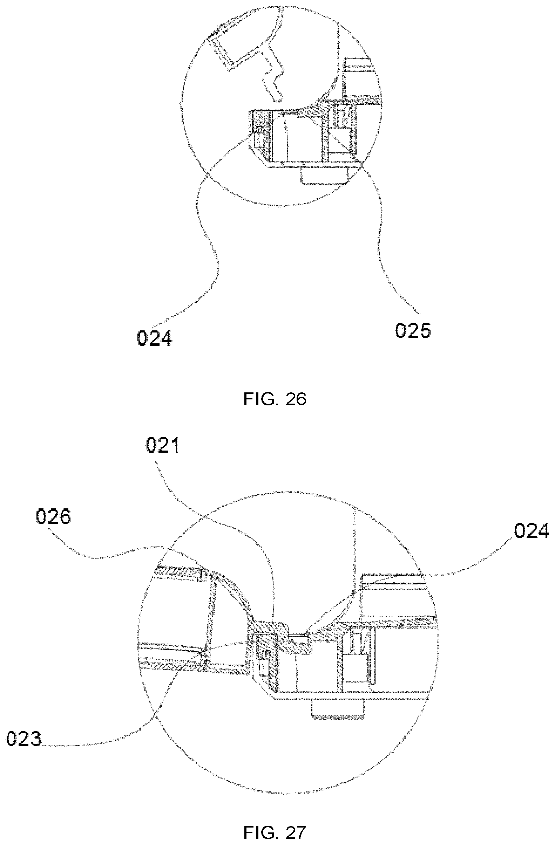

In the present embodiment, as shown in Figs. 26 and 27, a position-limiting step 023 is provided between the mounting hole 024 and the housing of the body 1, and a position-limiting barrier edge 025 extending in a direction towards the cooking cavity 3 is provided in the mounting hole 024, and when the removable door panel assembly 2 is in an opened state, the position-limiting step 023 and the position-limiting barrier edge 025 simultaneously abut against the mounting foot 021, such that the removable door panel assembly 2 remains opened. Such a structure enables the door panel main body 022 to be positionally limited in a proximately horizontal state after being opened, which facilitates taking food out of the cooking cavity 3 and placing food thereinto.

In the present embodiment, as shown in Figs. 26 and 27, the mounting foot 021 is stepped, and a position-limiting groove 026 is formed on the side of the mounting foot 021 facing outwards, wherein when the removable door panel assembly 2 is in an opened state, the position-limiting step 023 is embedded into the position-limiting groove 026, while the free end of the mounting foot 021 abuts against the position-limiting barrier edge 025. The stepped mounting foot 021 structure is reasonable and reliable, and can extend the maximal angle of the removable door panel assembly 2 after rotated to be opened. Moreover, in a completely flipped state, the mounting foot 021 cannot be pulled out of the mounting hole 024.

In the present embodiment, when the removable door panel assembly 2 is rotated to be inclined, the mounting foot 021 can be inserted into the mounting hole 024 or be pulled out of the mounting hole 024. In an inclined state, the mounting foot 021 of the removable door panel assembly 2 is freely movable within the mounting hole 024, and therefore, the mounting foot 021 can be easily pulled out of the mounting hole 024, achieving simple and convenient disassembly.

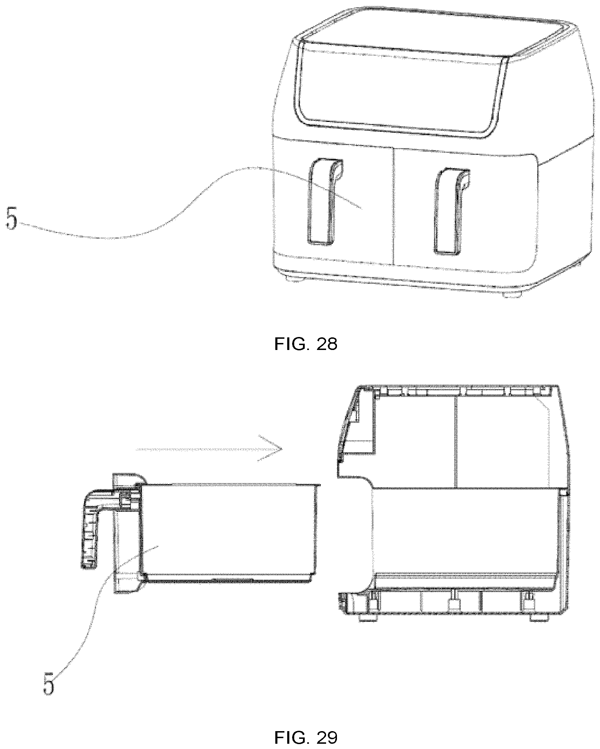

As another embodiment, as shown in Figs. 28-31, the drawer-type pot assembly 5 is composed of a left pot 51 and a right pot 52, and the left pot 51 and the right pot 52 are each provided therein with an independent food placement cavity. During cooking, food can be separately placed respectively in the left pot 51 and in the right pot 52, for example, different kinds of food can be placed, or same food can be placed for being cooked in different ways. In this way, food cooking is made more flexible, and different tastes can be satisfied.

In the present embodiment, the left pot 51 and the right pot 52 form an integrated structure or a split-type structure in which the pots are allowed ot be detached and separated. The integrated structure of the left pot 51 and the right pot 52 is formed through integrated stamping forming, and the left pot 51 and the right pot 52 can be isolated from each other through a baffle (i.e., division plate) 40. If the left pot 51 and the right pot 52 form a split-type structure in which the pots are allowed ot be detached and separated, a splicing structure is provided between the left pot 51 and the right pot 52, and baffles 40 can be respectively provided for the left pot 51 and the right pot 52 at the joint.

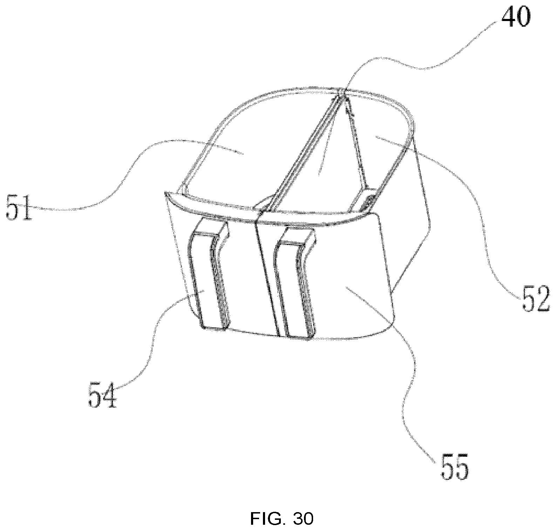

In the present embodiment, as shown in Fig. 30, the left pot 51 and the right pot 52 are preferably separated from each other by baffles 40, which is a removable mounting structure, and a pot having one single cavity is formed by communicating the left pot 51 with the right pot 52 through the removal of the baffle 40.

In the meantime, the outsides of the left pot 51 and the right pot 52 are each provided with a pot door panel 55, a handle 54 is mounted on the pot door panel 55, and external surfaces of the two pot door panels 55 are aligned with each other and with the housing surface of the body 1, which makes the appearance more aesthetic.

Compared with the prior art, the air fryer having multiple use forms according to the present disclosure can achieve beneficial technical effects, such as:
1. A removable eversible (rotatable) door panel assembly or a drawer-type dual pot assembly can be matched with the door frame of the cooking cavity, such that the air fryer has two forms and a corresponding product form can be flexibly selected according to the characteristics of the food to be cooked or the characteristics of the food container;
2. The door panel assembly is mounted in the mounting hole on the door frame via the mounting foot, and is meanwhile positionally limited through the position-limiting step and the position-limiting barrier edge, so as to ensure that the position of the door panel assembly in a closed state or in an opened state is limited, ensuring the reliability of the product; if the door panel assembly needs to be removed, the mounting foot can be pulled out of the mounting hole just by rotating the door panel assembly to an inclined direction, wherein the door panel assembly can be removed easily, and the user operations are convenient;
3. The drawer-type pot assembly is composed of a left pot and a right pot, each of which is provided therein with an independent food placement cavity, and accordingly, food of various tastes can be cooked simultaneously; in addition, the division plate between the left pot and the right pot is a removable mounting structure, and a pot having one single cavity is formed by the left pot and the right pot together after the removal of the division plate, that is to say, compared with a traditional drawer-type basket having one single cavity, the forms of the air fryer according to the present solution can further be enriched, and the product enables, in a better way, a flexible selection of corresponding product forms according to the characteristics of the food to be cooked or the characteristics of the food container.

Although the present disclosure has been described above with reference to the embodiments, various improvements may be made thereto and components therein may be replaced by equivalents, without departing from the scope of the present disclosure. Particularly, all of various features in the embodiments disclosed in the present disclosure may be used in combination with each other in any manner as long as there is no structural conflict, while these combinations are not exhaustively described in the present description only for reasons of space omission and resource saving. Therefore, the present disclose is not restricted to specific embodiments disclosed herein, but covers all technical solutions falling within the scope of the claims.

### Industrial Applicability

The present disclosure provides a multiform basket for an air fryer and an air fryer having multiple use forms. The multiform basket for an air fryer provided in the present disclosure can be switched between two forms, i.e., the form of a single placement cavity and the form of two placement cavities, as required, which facilitates food cooking, and the splicing, cooperation and positioning of the basket are reliable, enabling strong practicability. The air fryer having multiple use forms provided in the present disclosure has two forms, i.e., a removable eversible door panel and the multiform basket described above, and a corresponding product form can be flexibly selected according to the characteristics of the food to be cooked or the characteristics of the food container.

## Claims

1. A multiform basket for an air fryer, wherein the basket is formed by splicing a left pot (51) and a right pot (52) together side by side, and at least one removable baffle (40) is provided at a joint between the left pot (51) and the right pot (52), and is configured to enable a single placement cavity or two placement cavities to be formed inside the basket.

2. The multiform basket for an air fryer according to claim 1, wherein the left pot (51) and the right pot (52) are respectively provided with a left baffle holder (515) and a right baffle holder (523) at the joint, both the left baffle holder (515) and the right baffle holder (523) are provided with a guide structure, and the at least one baffle (40) is vertically inserted into the left baffle holder (515) and the right baffle holder (523) along the corresponding guide structure.

3. The multiform basket for an air fryer according to claim 2, wherein position-limiting bumps (153) are respectively arranged at upper portions of both ends of the left baffle holder (515) and the right baffle holder (523) side by side, wherein a guide rail (151) is formed between the side-by-side arranged position-limiting bumps (153) and serves as the guide structure, and a side edge of the at least one baffle (40) is configured to be able to be embedded into the guide rail (151)basket,
preferably, a position-limiting protrusion (402) is provided at a position on a side edge of the at least one baffle (40) corresponding to the corresponding position-limiting bump (153), and the position-limiting protrusion (402) is configured to be located at an underside of the corresponding position-limiting bump (153) when a lower end of the at least one baffle (40) is inserted into the left baffle holder (515) or the right baffle holder (523) to reach the bottom thereof.

4. The multiform basket for an air fryer according to claim 2 or 3, wherein one of the left baffle holder (515) and the right baffle holder (523) is provided with an insertion bone structure (131), and the other one is provided with an insertion slot structure (152) matching the insertion bone structure (131).

5. The multiform basket for an air fryer according to claim 3 or 4, further comprising a fixing bolt sleeve configured to be sleeved over the left baffle holder (515) and the right baffle holder (523) at the joint between the left pot (51) and the right pot (52) in a situation where the at least one baffle (40) is removed such that the single placement cavity is formed inside the basket, wherein two ends of the fixing bolt sleeve are each provided with an elastic buckle plate (601) at a position corresponding to the corresponding position-limiting bump (153), and the elastic buckle plate (601) is configured to be interlocked with the corresponding position-limiting bump (153).

6. The multiform basket for an air fryer according to claim 1, wherein one of the left pot (51) and the right pot (52) is provided with a positioning post (26), and the other one is provided with a positioning hole (27) matching the positioning post (26) and is further provided with a receiving slot (25) corresponding to the positioning post (26), wherein the positioning post (26) is configured to move to be accommodated in the receiving slot (25), when the left pot (51) and the right pot (52) are not spliced together,
preferably, the positioning post (26) is configured to be rotatably arranged at an end of the receiving slot (25) and be able to be accommodated in the receiving slot (25) when being rotated to a vertically oriented state, and
preferably, the positioning post (26) is in a conical structure, and the positioning hole (27) is a conical insertion hole.

7. The multiform basket for an air fryer according to claim 6, wherein side walls of the left pot (51) and the right pot (52) are each provided at the joint with a position-limiting block (212), each position-limiting block (212) is vertically provided with a guide slot (213), and the at least one baffle (40) is configured to be embedded into and slide in the corresponding guide slot (213).

8. The multiform basket for an air fryer according to claim 7, further comprising a fixing bolt sleeve (60), which is configured to be connected in an insertion way to the side wall at the joint between the left pot (51) and the right pot (52) when the basket is in a state of the single placement cavity, wherein the fixing bolt sleeve (60) includes a bolt sleeve backboard (91) and position-limiting folded edges (92) arranged on edges of the bolt sleeve backboard (91), an elastic buckle portion (93) is further provided on the bolt sleeve backboard (91), and two sides of the position-limiting block (212) are each provided with a position-limiting extension insertion board (214), wherein the position-limiting extension insertion boards (214) are configured to be able to cooperate with and be connected in an insertion way to the position-limiting folded edges (92), while the elastic buckle portion (93) and the position-limiting block (212) are interlocked with each other.

9. The multiform basket for an air fryer according to claim 7, further comprising a locking device (115), which is configured to be mounted on bottoms of the left pot (51) and the right pot (52) at the joint when the basket is in the state of the single placement cavity, so as to connect and fix the left pot (51) and the right pot (52).

10. The multiform basket for an air fryer according to claim 9, wherein a plurality of locking bones (211) are provided at intervals on bottoms of the left pot (51) and the right pot (52) at the joint, the locking device (115) comprises a planar plate (1153) and side plates (1152) arranged on two sides of the planar plate (1153), a plurality of protrusions (1151) are arranged at intervals on inner sides of the side plates (1152), each adjacent protrusions (1151) are provide therebetween with a notch (1155) matching the locking bone (211), the locking device (115) covers the locking bones (211), and the locking bones (211) are configured to enter the space between the protrusions (1151) and the planar plate (1153) through the corresponding notches (1155).

11. The multiform basket for an air fryer according to any one of claims 1 to 10, wherein the left pot (51) and the right pot (52) are each provided therein with a removable food tray (110).

12. An air fryer having multiple use forms, comprising a body (1), wherein a cooking cavity (3) is formed in the body (1), and one side of the body (1) is provided with an opening to form a door frame (4) communicating with the cooking cavity (3), wherein the multiform basket for an air fryer according to any one of claims 1 to 11 is arranged at the door frame (4).

13. The air fryer having multiple use forms according to claim 12, wherein the basket is a drawer-type basket, outsides of the left pot (51) and the right pot (52) are each provided with a door panel, each door panel is provided with a handle, and external surfaces of the two door panels are aligned with each other and with a housing surface of the body (1).

## Patentansprüche

1. Mehrformkorb für eine Heißluftfritteuse, wobei der Korb durch das Zusammenfügen eines linken Topfes (51) und eines rechten Topfes (52) nebeneinander gebildet wird und zumindest eine entfernbare Trennwand (40) an einer Verbindungsstelle zwischen dem linken Topf (51) und dem rechten Topf (52) vorgesehen ist, und so konfiguriert ist, dass ein einziger Platzierungshohlraum oder zwei Platzierungshohlräume im Inneren des Korbes gebildet werden können.

2. Mehrformkorb für eine Heißluftfritteuse nach Anspruch 1, wobei der linke Topf (51) und der rechte Topf (52) an der Verbindungsstelle jeweils mit einem linken Trennwandhalter (515) und einem rechten Trennwandhalter (523) versehen sind, wobei sowohl der linke Trennwandhalter (515) als auch der rechte Trennwandhalter (523) mit einer Führungsstruktur versehen sind und die zumindest eine Trennwand (40) entlang der entsprechenden Führungsstruktur vertikal in den linken Trennwandhalter (515) und den rechten Trennwandhalter (523) eingefügt ist.

3. Mehrformkorb für eine Heißluftfritteuse nach Anspruch 2, wobei Positionsbegrenzungserhebungen (153) jeweils an oberen Abschnitten beider Enden des linken Trennwandhalters (515) und des rechten Trennwandhalters (523) nebeneinander angeordnet sind, wobei eine Führungsschiene (151) zwischen den nebeneinander angeordneten Positionsbegrenzungserhebungen (153) ausgebildet ist und als Führungsstruktur dient, und ein Seitenrand der zumindest einen Trennwand (40) zum Einbetten in den Korb mit der Führungsschiene (151) konfiguriert ist, wobei ein Positionsbegrenzungsvorsprung (402) vorzugsweise an einer Position an einem Seitenrand der zumindest einen Trennwand (40) vorgesehen ist, die dem entsprechenden Positionsbegrenzungsvorsprung (153) entspricht, und der Positionsbegrenzungsvorsprung (402) so konfiguriert ist, dass dieser an einer Unterseite des entsprechenden Positionsbegrenzungsvorsprungs (153) angeordnet ist, wenn ein unteres Ende der zumindest einen Trennwand (40) in den linken Trennwandhalter (515) oder den rechten Trennwandhalter (523) eingefügt ist, um dessen Boden zu erreichen.

4. Mehrformkorb für eine Heißluftfritteuse nach Anspruch 2 oder 3, wobei der linke Trennwandhalter (515) oder der rechte Trennwandhalter (523) mit einer Einführknochenstruktur (131) versehen ist, und der andere mit einer zur Einführknochenstruktur (131) passenden Einführschlitzstruktur (152) versehen ist.

5. Mehrformkorb für eine Heißluftfritteuse nach Anspruch 3 oder 4, der ferner eine Befestigungsbolzenhülse umfasst, die zum Stülpen über den linken Trennwandhalter (515) und den rechten Trennwandhalter (523) an der Verbindung zwischen dem linken Topf (51) und dem rechten Topf (52) in einer Situation konfiguriert ist, in der die zumindest eine Trennwand (40) entfernt ist, sodass der einzige Platzierungshohlraum im Innern des Korbs gebildet wird, wobei beide Enden der Befestigungsbolzenhülse jeweils mit einer elastischen Verschlussplatte (601) an einer Position versehen sind, die der entsprechenden Positionsbegrenzungserhebung (153) entspricht, und die elastische Verschlussplatte (601) zum Verriegeln mit der entsprechenden Positionsbegrenzungserhebung (153) konfiguriert ist.

6. Mehrformkorb für eine Heißluftfritteuse nach Anspruch 1, wobei der linke Topf (51) oder der rechte Topf (52) mit einem Positionierungsstift (26) versehen ist, und der andere mit einer zum Positionierungsstift (26) passenden Positionierungsöffnung (27) versehen ist, und ferner mit einem Aufnahmeschlitz (25) versehen ist, der dem Positionierungsstift (26) entspricht, wobei der Positionierungsstift (26) so konfiguriert ist, dass dieser sich zum Aufnehmen im Aufnahmeschlitz (25) bewegt, wenn der linke Topf (51) und der rechte Topf (52) nicht miteinander zusammengefügt sind, wobei der Positionierungsstift (26) vorzugsweise so konfiguriert ist, dass dieser an einem Ende des Aufnahmeschlitzes (25) drehbar angeordnet ist und imstande ist, im Aufnahmeschlitz (25) untergebracht zu werden, wenn dieser in einen vertikal ausgerichteten Zustand gedreht wird, und der Positionierungsstift (26) vorzugsweis eine konische Struktur aufweist und die Positionierungsöffnung (27) eine konische Einführöffnung ist.

7. Mehrformkorb für eine Heißluftfritteuse nach Anspruch 6, wobei Seitenwände des linken Topfes (51) und des rechten Topfes (52) an der Verbindungsstelle jeweils mit einem Positionsbegrenzungsblock (212) versehen sind, jeder Positionsbegrenzungsblock (212) vertikal mit einem Führungsschlitz (213) versehen ist, und die zumindest eine Trennwand (40) zum Verschieben und Einbetten in den entsprechenden Führungsschlitz (213) konfiguriert ist.

8. Mehrformkorb für eine Heißluftfritteuse nach Anspruch 7, der ferner eine Befestigungsbolzenhülse (60) umfasst, die zum einfügenden Verbinden mit der Seitenwand an der Verbindungsstelle zwischen dem linken Topf (51) und dem rechten Topf (52) konfiguriert ist, wenn sich der Korb in einem Zustand des einzigen Platzierungshohlraums befindet, wobei die Befestigungsbolzenhülse (60) eine Bolzenhülsenrückwand (91) und an Rändern der Bolzenhülsenrückwand (91) angeordnete Positionsbegrenzung-Falzränder (92) umfasst, ein elastischer Verschlussabschnitt (93) ferner an der Bolzenhülsenrückwand (91) vorgesehen ist, und zwei Seiten des Positionsbegrenzungsblocks (212) jeweils mit einer Positionsbegrenzung-Verlängerungseinschubplatte (214) versehen sind,
wobei die Positionsbegrenzung-Verlängerungseinschubplatten (214) so konfiguriert sind, dass diese mit den Positionsbegrenzung-Falzrändern (92) zusammenwirken und mit diesen einführbar verbunden werden können, während der elastische Verschlussabschnitt (93) und der Positionsbegrenzungsblock (212) miteinander verriegelt sind.

9. Mehrformkorb für eine Heißluftfritteuse nach Anspruch 7, der ferner eine Verriegelungsvorrichtung (115) umfasst, die zum Montieren an den Böden des linken Topfes (51) und des rechten Topfes (52) an der Verbindungsstelle konfiguriert ist, wenn sich der Korb im Zustand des einzigen Platzierungshohlraums befindet, um den linken Topf (51) und den rechten Topf (52) zu verbinden und zu fixieren.

10. Mehrformkorb für eine Heißluftfritteuse nach Anspruch 9, wobei eine Vielzahl von Verriegelungsknochen (211) in Abständen an den Böden des linken Topfes (51) und des rechten Topfes (52) an der Verbindungsstelle vorgesehen sind, die Verriegelungsvorrichtung (115) eine ebene Platte (1153) und Seitenplatten (1152) umfasst, die an zwei Seiten der ebenen Platte (1153) angeordnet sind, eine Vielzahl von Vorsprüngen (1151) in Abständen an den Innenseiten der Seitenplatten (1152) angeordnet sind, jeweils benachbarte Vorsprünge (1151) dazwischen mit einer zum Verriegelungsknochen (211) passenden Kerbe (1155) versehen sind, die Verriegelungsvorrichtung (115) die Verriegelungsknochen (211) abdeckt, und die Verriegelungsknochen (211) zum Eintritt durch die entsprechenden Kerben (1155) in den Raum zwischen den Vorsprüngen (1151) und der ebenen Platte (1153) konfiguriert sind.

11. Mehrformkorb für eine Heißluftfritteuse nach einem der Ansprüche 1 bis 10, wobei der linke Topf (51) und der rechte Topf (52) jeweils mit einer herausnehmbaren Lebensmittelschale (110) versehen sind.

12. Heißluftfritteuse mit mehreren Verwendungsformen, umfassend einen Körper (1), wobei ein Garraum (3) im Körper (1) ausgebildet ist und eine Seite des Körpers (1) mit einer Öffnung versehen ist, um einen Türrahmen (4) zu bilden, der mit dem Garraum (3) in Verbindung steht, wobei der Mehrformkorb für eine Heißluftfritteuse gemäß einem der Ansprüche 1 bis 11 am Türrahmen (4) angeordnet ist.

13. Heißluftfritteuse mit mehreren Verwendungsformen nach Anspruch 12, wobei der Korb ein Schubladenkorb ist, die Außenseiten des linken Topfes (51) und des rechten Topfes (52) jeweils mit einer Türverkleidung versehen sind, jede Türverkleidung mit einem Griff versehen ist, und die Außenseiten der beiden Türverkleidungen miteinander und mit einer Gehäusefläche des Körpers (1) ausgerichtet sind.

## Revendications

1. Panier multiforme de friteuse à air chaud, dans lequel le panier est formé par raccordement l'un à l'autre côte à côte d'un contenant gauche (51) et d'un contenant droit (52), et au moins une cloison amovible (40) est disposée au niveau d'une jonction entre le contenant gauche (51) et le contenant droit (52), et est configurée pour permettre de former une unique cavité de placement ou deux cavités de placement à l'intérieur du panier.

2. Panier multiforme de friteuse à air chaud selon la revendication 1, dans lequel le contenant gauche (51) et le contenant droit (52) sont respectivement pourvus d'un porte-cloison gauche (515) et d'un porte-cloison droit (523) au niveau de la jonction, le porte-cloison gauche (515) et le porte-cloison droit (523) étant tous les deux pourvus d'une structure de guidage, et l'au moins une cloison (40) est introduite verticalement dans le porte-cloison gauche (515) et dans le porte-cloison droit (523) le long de la structure de guidage correspondante.

3. Panier multiforme de friteuse à air chaud selon la revendication 2, dans lequel des bossages de limitation de position (153) sont disposés respectivement côte à côte au niveau de parties supérieures des deux extrémités du porte-cloison gauche (515) et du porte-cloison droit (523), dans lequel un rail de guidage (151) est formé entre les bossages de limitation de position disposés côte à côte (153) et sert de structure de guidage, et un bord latéral de l'au moins une cloison (40) est configuré pour pouvoir être incorporé dans le rail de guidage (151) du panier,
de préférence, une saillie de limitation de position (402) est disposée à une position située sur un bord latéral de l'au moins une cloison (40) correspondant au bossage de limitation de position correspondant (153), et la saillie de limitation de position (402) est configurée pour être située au niveau d'un côté inférieur du bossage de limitation de position correspondant (153) lorsqu'une extrémité inférieure de l'au moins une cloison (40) est introduite dans le porte-cloison gauche (515) ou dans le porte-cloison droit (523) pour en atteindre le fond.

4. Panier multiforme de friteuse à air chaud selon la revendication 2 ou la revendication 3, dans lequel l'un du porte-cloison gauche (515) et du porte-cloison droit (523) est pourvu d'une structure d'arête d'introduction (131), et l'autre porte-cloison est pourvu d'une structure de fente d'introduction (152) s'adaptant à la structure d'arête d'introduction (131).

5. Panier multiforme de friteuse à air chaud selon la revendication 3 ou la revendication 4, comprenant en outre un manchon de verrouillage de fixation configuré pour être manchonné sur le porte-cloison gauche (515) et sur le porte-cloison droit (523) au niveau de la jonction entre le contenant gauche (51) et le contenant droit (52) dans une situation de retrait de l'au moins une cloison (40) de façon à former l'unique cavité de placement à l'intérieur du panier, dans lequel deux extrémités du manchon de verrouillage de fixation sont individuellement pourvues d'une tôle emboutie élastique (601) à une position correspondant au bossage de limitation de position correspondant (153), et la tôle emboutie élastique (601) est configurée pour un verrouillage mutuel avec le bossage de limitation de position correspondant (153).

6. Panier multiforme de friteuse à air chaud selon la revendication 1, dans lequel l'un du contenant gauche (51) et du contenant droit (52) est pourvu d'un tenon de positionnement (26), et l'autre contenant est pourvu d'un trou de positionnement (27) s'adaptant au tenon de positionnement (26) et est en outre pourvu d'une fente de réception (25) correspondant au tenon de positionnement (26), dans lequel le tenon de positionnement (26) est configuré pour être déplacé de façon à être reçu dans la fente de réception (25), lorsque le contenant gauche (51) et le contenant droit (52) ne sont pas raccordés l'un à l'autre,
de préférence, le tenon de positionnement (26) est configuré pour être disposé mobile en rotation au niveau d'une extrémité de la fente de réception (25) et pour pouvoir être reçu dans la fente de réception (25) lorsqu'il est tourné dans un état orienté verticalement, et
de préférence, le tenon de positionnement (26) a la forme d'une structure conique, et le trou de positionnement (27) est un trou d'introduction conique.

7. Panier multiforme de friteuse à air chaud selon la revendication 6, dans lequel des parois latérales du contenant gauche (51) et du contenant droit (52) sont individuellement pourvues, au niveau de la jonction, d'un bloc de limitation de position (212), chaque bloc de limitation de position (212) étant pourvu verticalement d'une fente de guidage (213), et l'au moins une cloison (40) est configurée pour être incorporée dans la fente de guidage correspondante (213) et pour coulisser dans cette dernière.

8. Panier multiforme de friteuse à air chaud selon la revendication 7, comprenant en outre un manchon de verrouillage de fixation (60), qui est configuré pour être relié dans un chemin d'introduction à la paroi latérale au niveau de la jonction entre le contenant gauche (51) et le contenant droit (52) lorsque le panier est dans un état de l'unique cavité de placement, dans lequel le manchon de verrouillage de fixation (60) comprend une plaque de fond de manchon de verrouillage (91) et des bords pliés de limitation de position (92) disposés sur les bords de la plaque de fond de manchon de verrouillage (91), et une partie emboutie élastique (93) est en outre disposée sur la plaque de fond de manchon de verrouillage (91), et deux côtés du bloc de limitation de position (212) sont individuellement pourvus d'une plaque d'introduction de prolongement de limitation de position (214), dans lequel les plaques d'introduction de prolongement de limitation de position (214) sont configurées pour pouvoir coopérer avec les bords pliés de limitation de position (92), et pour être reliées dans un chemin d'introduction à ces derniers, tandis que la partie emboutie élastique (93) et le bloc de limitation de position (212) sont verrouillés mutuellement l'un avec l'autre.

9. Panier multiforme de friteuse à air chaud selon la revendication 7, comprenant en outre un dispositif de verrouillage (115), qui est configuré pour être monté sur les fonds du contenant gauche (51) et du contenant droit (52) au niveau de la jonction lorsque le panier est dans l'état de l'unique cavité de placement, de façon à relier et à fixer le contenant gauche (51) et le contenant droit (52).

10. Panier multiforme de friteuse à air chaud selon la revendication 9, dans lequel les arêtes d'une pluralité d'arêtes de verrouillage (211) sont disposées à certains intervalles sur les fonds du contenant gauche (51) et du contenant droit (52) au niveau de la jonction, le dispositif de verrouillage (115) comprend une plaque plane (1153) et des plaques latérales (1152) disposées sur deux côtés de la plaque plane (1153), les saillies d'une pluralité de saillies (1151) sont disposées à certains intervalles sur des côtés intérieurs des plaques latérales (1152), deux saillies adjacentes (1151) sont pourvues, entre elles, d'une encoche (1155) s'adaptant à l'arête de verrouillage (211), le dispositif de verrouillage (115) recouvre les arêtes de verrouillage (211), et les arêtes de verrouillage (211) sont configurées pour pénétrer l'espace entre les saillies (1151) et la plaque plane (1153) à travers les encoches correspondantes (1155).

11. Panier multiforme de friteuse à air chaud selon l'une quelconque des revendications 1 à 10, dans lequel le contenant gauche (51) et le contenant droit (52) sont individuellement pourvus en leur sein d'un plateau alimentaire amovible (110).

12. Friteuse à air chaud ayant de multiples formes d'utilisation, comprenant un corps (1), dans laquelle une cavité de cuisson (3) est formée dans le corps (1), et un côté du corps (1) est pourvu d'une ouverture de façon à former un bâti de porte (4) communiquant avec la cavité de cuisson (3), dans laquelle le panier multiforme de friteuse à air chaud selon l'une quelconque des revendications 1 à 11 est disposé au niveau du bâti de porte (4).

13. Friteuse à air chaud ayant de multiples formes d'utilisation selon la revendication 12, dans laquelle le panier est un panier de type tiroir, les côtés extérieurs du contenant gauche (51) et du contenant droit (52) sont individuellement pourvus d'un panneau de porte, chaque panneau de porte est pourvu d'une poignée, et des surfaces extérieures des deux panneaux de portes sont alignées l'une avec l'autre et avec une surface de boîtier du corps (1).
